Europäisches Patentamt

European Patent Office

Office européen des brevets

(11) Veröffentlichungsnummer : **0 303 649 B1**

(12) **EUROPÄISCHE PATENTSCHRIFT**

(45) Veröffentlichungstag der Patentschrift :
01.07.92 Patentblatt 92/27

(21) Anmeldenummer : 88901781.0

(22) Anmeldetag : 29.02.88

(86) Internationale Anmeldenummer :
PCT/CH88/00050

(87) Internationale Veröffentlichungsnummer :
WO 88/06675 07.09.88 Gazette 88/20

(51) Int. Cl.⁵ : **F01B 9/02,** F16F 15/24,
F16C 7/02, F02B 33/24

(54) **PENDELKOLBENMASCHINE.**

(30) Priorität : 27.02.87 CH 744/87
26.10.87 CH 4174/87

(43) Veröffentlichungstag der Anmeldung :
22.02.89 Patentblatt 89/08

(45) Bekanntmachung des Hinweises auf die
Patenterteilung :
01.07.92 Patentblatt 92/27

(84) Benannte Vertragsstaaten :
AT CH DE FR GB IT LI SE

(56) Entgegenhaltungen :
FR-A- 2 132 021
FR-A- 2 139 206
GB-A- 2 135 385

(73) Patentinhaber : **Salzmann, Willy Ernst**
**Schönegg 7**
**CH-6300 Zug (CH)**

(72) Erfinder : **Salzmann, Willy Ernst**
**Schönegg 7**
**CH-6300 Zug (CH)**

(74) Vertreter : **Troesch Scheidegger Werner AG**
**Patentanwälte, Siewerdtstrasse 95, Postfach**
**CH-8050 Zürich (CH)**

**Beschreibung**

Die vorliegende Erfindung betrifft weitere Verbesserungen der vom gleichen Anmelder bereits früher vorgeschlagenen Pendelkolbenmaschine, die vorzugsweise als Motor oder Kompressor ausgebildet ist. Eine solche Pendelkolbenmaschine ist beispielsweise bekannt aus FR-A-2 132 021 und GB-A-1 555 066. Diese Veröffentlichungen betreffen eine Pendelkolbenmaschine nach dem Oberbegriff des Anspruchs 1. Wie bei solchen Pendelkolbenmaschinen üblich, entfällt die infolge des Gasdrucks auftretende seitliche Kraft des Kolbens auf den Zylinder weitgehend, während bei Tauchkolben diese Kraft für die Kolbenreibung massgebend ist. Nachdem beim Pendelkolben diese Kraft grösstenteils entfällt, kommt der dynamischen Seitenkraft eine besondere Bedeutung zu. Da die Trag- und Reibungsfläche des Pendelkolbens klein ist, wird diese dynamische Seitenkraft zu einem Problem für die Lebensdauer des Kolbens und des Zylinders. Zur Lösung dieses Problems wird erfindungsgemäss vorgeschlagen, dass in Verlängerung der Pleuelstange über die Pleuelstange hinaus ein Gegengewicht (Gegenmasse) angeordnet und derart bemessen ist, dass das Zentrum des Pleuellagers mindestens angenähert im Stossmittelpunkt bezüglich des Kolbenmittelpunktes des darauf gelagerten Körpers, bestehend aus Kolben, Pleuelstange, Pleuellager und Gegengewicht, liegt. Dadurch läuft der Kolben angenähert ohne dynamische Seitenkräfte im Zylinder.

Der Stossmittelpunkt liegt bei einem geraden Stab konstanten Querschnitts vom Ende als Bezugspunkt aus bei 2/3 (zwei Drittel) seiner Länge. Wird der Stab dort quer angestossen, erfährt der Bezugspunkt (das Ende) keine Querbeschleunigung. Ein solcher Stossmittelpunkt existiert bei jedem starren Körper. Ein nach dieser Lehre bemessenes Gegengewicht bewirkt zwar auch eine teilweise Auswuchtung der schwingenden Massen, aber darum geht es hier nicht, wie in der Beschreibung noch näher erläutert wird. Dagegen ist in FR-A-2 139 206 eine vollständige Auswuchtung vorgeschlagen worden. Dabei liegt das Pleuellager im Schwerpunkt des auszuwuchtenden Körpers. Infolge der Schwenkbewegung ergibt dies jedoch hohe dynamische Seitenkräfte am Tauchkolben, die für einen Pendelkolben untragbar wären.

Bei einer Ausführungsform mit viereckigem Pendelkolben können die Pleuelstange und das Gegengewicht gleich breit gemacht werden wie der Kolben und in einem eng anliegenden Gehäuse laufen. Sie bilden damit einen volumetrischen Pleuellader mit grossem Verdrängungsvolumen, welcher zum Beispiel den Gaswechsel bei Zweitaktmotoren stark verbessert.

Mit einem neuartigen Zylinderkopf, der eine katalytische Zündung ermöglicht, kann infolge der definierten Querströmung im Brennraum auf einen Hilfskolben (vorgeschlagen in Automotive Engineer, Februar/März 1988) verzichtet werden.

Weitere bevorzugte Ausführungsarten der Erfindung ergeben sich aus den abhängigen Ansprüchen.

Anwendunsbereiche sind Stationär-, Fahrzeug-, Schiffs- und Flugmotoren sowie Kompressoren beliebiger Grösse.

Als Ausführungsbeispiele zeigen in vereinfachter Darstellung:

Fig. 1 einen Viertakt-Fahrzeugmotor im halben Querschnitt und

Fig. 2 dessen Zylinderoberteil von unten gesehen,

Fig. 3 einen kleinen Kühlkompressor im teilweisen Horizontalschnitt,

Fig. 4 einen winzigen Modellmotor im vergrösserten Querschnitt,

Fig. 5 und 6 einen Zweitakt-Fahrzeugmotor im halben Längsschnitt und im Querschnitt,

Fig. 7 bis 10 vergrösserte Einzelheiten der Kolbenecken von Fig. 6,

Fig. 11 und 12 einen Zweitakt-Automobilmotor im Querschnitt und teilweisen Längsschnitt,

Fig. 13 und 14 vergrösserte Einzelheiten einer Kolbenecke,

Fig. 15 eine Variante des Zylinderkopfs im Querschnitt und

Fig. 16 und 17 eine weitere Variante des Zylinderkopfs im teilweisen Quer- und Längsschnitt, wobei die Kurbelwelle überall im Uhrzeigersinn rotiert.

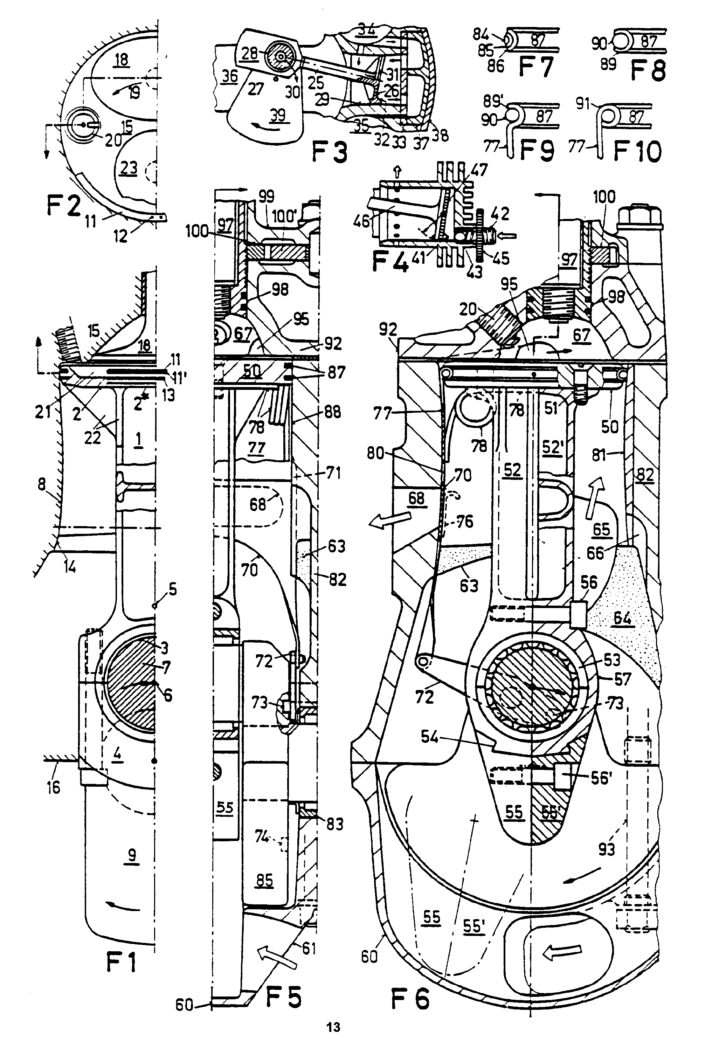

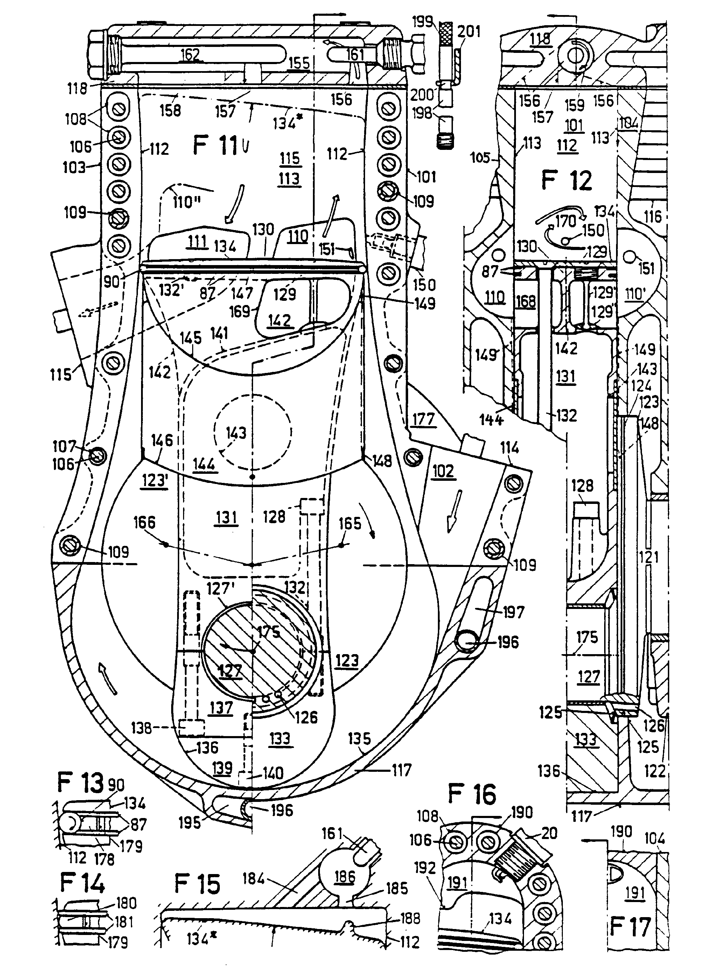

Beim Viertakt-Fahrzeugmotor gemäss Fig. 1 und 2 ist die Pleuelstrange 1 mit integriertem Pendelkolben 2 über das Pleuellager 3 hinaus verlängert und der Pleueldeckel als Gegenaewicht 4 ausgebildet, wodurch der Schwerpunkt 5 dieses Körpers 1-4 näher an das Zentrum 6 des Kurbelzapfens 7 heranrückt. Bei optimaler Auslegung des Gegengewichts 4 sind die durch Massenträgheit erzeugten dynamischen Seitenkräfte am Pendelkolben 2 Null, d.h. der Mittelpunkt 2* des Pendelkolbens bewegt sich auf einer Geraden. Dies ist dann der Fall, wenn das Zentrum 6 des Pleuellagers 3 im Rotationsmittelpunkt, auch Stossmittelpunkt genannt, des Körpers 1-4 liegt. Wäre dieser Körper ein gerader Stab konstanten Querschnitts, so läge sein Stossmittelpunkt bei 2/3 seiner Länge. Da beim Pendelkolben ausserdem die Kolbendichtung stets rechtwinklig zur Gaskraft liegt, entstehen auch diesbezüglich keine Seitenkräfte und somit kein Kolbenschlag. Die sehr kleinen dynamischen Seitenkräfte zufolge der Bewegung der Kolbenmitte 2* auf einer langgestreckten Acht sind vernachlässigbar, und die Reaktion des Pleuellager-Reibmomentes wirkt stets in Drehrichtung und hat kein Schlagen zur Folge. Der Körper 1-4 pendelt somit von sich aus um die Kolbenmitte 2*, ohne dass zwischen Pendelkolben 2 und gewölbten Zylinderwänden 8 nennenswerte Seitenkräfte auftreten, d.h. der Pendelkolben schwebt im Zylinder. Mann kann somit den Körper 1-4 als "Schwebekolben" bezeichnen. Bei passend gewählten Gegengewichten 9 der Kurbelwelle ist schon beim Einzylinder ein hervorragender Massenausgleich möglich. Der schlagfreie und nahezu vibrations- und reibungsfreie Lauf des Schwebekolbens dürfte für Hubkolbenmaschinen neue Horizonte eröffnen.

Nachdem nun der Pendelkolben von dynamischen Seitenkräften im wesentlichen ist, werden die Kolbenringe von ihrer Führungsaufgabe entlastet. Es kann somit ein niedriger Feuerring mit bombierter Kuppe und offenem Stoss verwendet werden. Besser ist jedoch ein Doppelring, der aus zwei unter sich gleichen Lamellen 11/11' besteht, die mit etwas versetzten (und somit überlappenden) Stössen aufeinanderliegen und auf der diametralen Gegenseite z.B. durch Punkt- oder elektronenschweissung 12 (Fig.2) miteinander verbunden sind. Damit wird die Gasdichtheit verbessert und der Doppelring am Rotieren gehindert (Ringstösse laufen lieber und dichten besser auf geraden als auf gewölbten Zylinderflächen). Eine dritte Lamelle 13 (event. auch Doppellamelle analog zu 11/11') ist in einer tiefen Nute radial stark verschiebbar gelagert und dient als Oelring und zusätzliche Gasdichtung. Auch Gas- und Oelringe gemäss dem bereits zitierten GB-Patent 1 555 066, jedoch ohne hydrostatische Kolbenführung, sind verwendbar. Nachdem der Pendelkolben 2 mitsamt Kolbenringen 11/13 und Pleuelstange 1 dank der hemdlosen Bauart, dem schmalen Kurbelwellen-Gegengewicht 9 und dem konischen Zylinderende 14 ohne weiteres auch bei montierter Kurbelwelle von unten her ein- und ausbaubar ist, kann der Zylinderkopf 15 mit dem Zylinder- und Kurbelgehäuse 8/16 einteilig z.B. in Eisen oder Leichtmetall gegossen sein, was bekanntlich Vorteile bietet. Der sehr kurze Zylinder 8 mit Kopf 15 lässt sich von unten her bearbeiten und nötigenfalls ausbüchsen und ergibt ein kompaktes Monoblock-Gehäuse.

Zur Ausnützung der Pendelbewegung des Kolbens 2 im Bereich des oberen Totpunktes ist der Zylinderkopf 15 wie folgt konzipiert: Bei Rechtslauf der Kurbelwelle kommt der Einlass von rechts durch ein vorzugsweise elliptisches Einlassventil 18, was zusammen mit dem nach unten voreilenden linken Rand des Pendelkolbens 2 gute Füllung und kräftigen Einlassdrall 19 in Richtung Zündkerze 20 ergibt. Dieser Drall setzt sich bei der Kompression in der Kolbenmulde 21 fort und wird im Bereich des oberen Totpunktes von der Querverschiebung der Ladung nach links (entsprechend der Kolbenpendelung) überlagert, was eine intensive Vermischung bewirkt. Die Kolbenkühlung erfolgt zum Teil durch die frei beweglichen (und daher nicht verkokenden) Ringe 11/11' und 13 und zum Teil durch die Pleuelstange 1 mit Stützrippen 22. Bei Pendelkolben aus Stahl mit angeschweissten Rohrpleueln lässt sich eine direkte Oelkühlung leicht verwirklichen. Auch ist eine Keramikbeschichtung der Kolbenmulde 21 möglich und bei Diesel-Direkteinspritzung vorteilhaft. Der Auspuff erfolgt durch das runde Ventil 23 im Quer- oder Gleichstrom.

Stellt sich die Aufgabe, Serienmotoren möglichst einfach mit Pendelkolben zu versehen, so genügt in vielen Fällen eine gewölbte Bearbeitung des Zylinders und die Montage einer Pleuelstange mit Pendelkolben und Gegengewicht, für das in der Oelwanne normalerweise genügend Freiraum besteht. Dadurch wird die Produktionsumstellung relativ einfach, insbesondere wenn der Serienmotor nasse, auswechselbare Zylinderbüchsen hat.

Die Ausführungsform gemäss Fig. 1 und 2 eignet sich für Einzylinder-, Reihen- und V-Motoren. Zur Vergrösserung des Hubraums bei gleichen Aussenabmessungen kann der runde Pendelkolben z.B. durch einen quadratischen ersetzt werden, wozu vier parallel oder V-förmig angeordnete Ventile mit zentraler Zündkerze gut passen. Hierbei soll der Einlass von links kommen, und die Zylinderbearbeitung erfordert einen separaten Zylinderkopf. Dies ist auch für grosse, langsam- oder mittelschnell-laufende Zwei- oder Viertaktmotoren möglich.

Auch beim Kurbeltrieb des Kompressors von Fig. 3 ist die Pleuelstange 25 mit angestauchtem Pendelkolben 26 über das Pleuellager 27 hinaus verlängert und als Gegengewicht 28 ausgebildet, das z.B. aus gestanztem Flachstahl besteht und durch Reibschweissung mit der Pleuelstange 25 verbunden sein kann. Die Montage dieses Schwebekolbens 25-28 erfolgt durch schräges Einführen in den gewölbten Zylinder 2. und über den vertikalen Kurbelzapfen 30 und die Fixierung in bekannter Weise mittels der Lagerbuchse 27, die zusammen mit dem Kolbenring 31 z.B. aus PTFE besteht. Zur Steigerung des volumetrischen Wirkungsgrades kann der Kolbenboden einen Konus 32 tragen, der in die Druckbohrung der Ventilplatte 33 eingreift. Der Zylinder 29 ist Teil eines Gussstücks, des die Saug- und Druckkammern 34 und 35 sowie den Lagerschild 36 umfasst. Bei hermetisch verschlossenen Kleinkompressoren wird dieses vormontierte Gussstück mitsamt Zylinderdeckel 37 und Asynchronmotor in ein topfförmiges und moglichst kreiszylindrisches Gehäuse 38 eingepresst, das z.B. durch eine Bodenplatte zugeschweisst wird. Die ganze, schraubenlose Montage ist sehr kostengünstig und wird durch den Schwebekolben 25-28 und das passende Kurbelwellen-Gegengewicht 39 ermöglicht, des schon bei einer Einzylindermaschine einen hervorragenden Massenausgleich ergibt. Dieser Kompressor kann auch als Mehrzylindermaschine in V-2- oder Sternanordnung ausgebildet werden, wobei die Pleuellager übereinander auf einem verlängerten Kurbelzapfen laufen und die Zylinder entsprechend gestaffelt sind. Solche Maschinen sind z.B. für Wärmepumpen oder grössere Kühlanlagen geeignet. Die Schmierung erfolgt in be-

3

kannter Weise durch dem Kühlmittel beigefügtes Oel, wobei der äusserst leichtlaufende Schwebekolben nur sehr geringe Oelmengen benötigt.

Der in Fig. 4 vergrössert skizzierte $CO_2$-Modellmotor hat dank Verwendung eines Schwebekolbens gegenüber bekannten $CO_2$-Motoren einen drastisch verminderten Gasverbrauch und daher je $CO_2$-Patrone eine vielfache Laufzeit. Dies zufolge der minimalen Reibungsverluste und einer asymmetrischen Gassteuerung, die auf einfachste Weise durch einen am nachlaufenden Kolbenrand angeordneten Steuerstift 41 erfolgt, der auf das darüber angeordnete Rückschlagventil der Gaszufuhr wirkt. Dieses besteht aus einer im Zylinderkopf eingeschraubten Ventilhülse 42 mit unterem Sitz für die Ventilkugel 43 aus Stahl oder Duroplast und oberem Gewinde für die ueberwurfmutter mit O-Ring des Druckgasrohres. Durch Höher- und Tieferschrauben der Ventilhülse 42 mittels Handrädchen 45 lassen sich die Steuerzeiten und damit die Leistung des Kleinstmotors bei nur geringer Totraumvariation genau regeln. Bei diesen winzigen Schwebekolbens 46 (und teilweise auch bei denen von Fig. 3) sind zylindrische (statt eingewölbte) Zylinder möglich, doch muss dann der Kolbenrand 47 sphärisch bombiert und oberhalb des Kolbenrings z.B. randriert sein, damit er nicht zeitweise die Dichtgrenze bildet, weil sonst Seitenkräfte mit Kolbenschlägen auftreten, Fig. 5 zeigt einen Zweitakt-Fahrzeugmotor im halben Längsschnitt und Fig. 6 im Querschnitt, während in Fig. 7 bis 10 vergrösserte Einzelteile der Kolbenecken von Fig. 6 ersichtlich sind. Auch dieser Vielstoff-Pendelkolben-Schiebermotor ist in beliebiger Anordnung, Anzahl und Grösse der Zylinder vorgesehen. Der nahezu quadratische Pendelkolben 50 ist mittels Schrauben 51 an der Pleuelstange 52/52′ befestigt, die aus zwei wenigstens angenähert gleichen, schalenförmigen Hälften besteht, das Pleuellager 53 umschliesst und unten z.B. mittels Schwalbenschwanz 54 das Gegengewicht 55/55′ trägt, wenn die beiden Verbindungsschrauben 56 und 56′ angezogen sind. Diese Bauweise ist leicht und kostengünstig und ergibt vor allem ein schlankes Pleuelauge 57, das nur im Bereich der Schrauben 56/56′ bearbeitet ist. Der Motor weist eine membrangesteuerte Kurbelkammerpumpe mit zusätzlichem Schaufellader auf, der durch das Pleuelstangen-Gegengewicht 55/55′ und das seine Bewegungsbahn eng umschliessende Kurbelgehäuse-Unterteil 60 mit ein- oder beidseitigen Membranflansch 61 gebildet wird und vor allem bewirkt, dass die Membraneinlässe schon im Bereich des unteren Totpunktes aufgerissen werden. Die Frischluft wird durch aerodynamisch geformte, z.B. aus Schaumstoff bestehende Kurbelkammer-Füllstücke 63 und 64 zu den seitlichen und mittleren Einlassmulden 65 und 66 geleitet, die vom Pendelkolben 50 asymmetrisch gesteuert werden, was eine gute Umkehrspülung ergibt. Die Pendelbewegung des Kolbens 50 quetscht die Frischluft anschliessend zum Brennraum 67, von wo die Rauchgase den Zylinder mit wiederum asymmetrischer Steuerung durch den stirnseitigen Auslass 68 verlassen. Der nahezu quadratische Zylinderquerschnitt reduziert die Kontaktflächen zwischen Einlass- und Rauchgasen auf rund 80 % eines flächengleichen Kreiszylinders. Anstelle eines Kolbenhemdes benötigt der Auslassschlitz 68 einen Steuerschieber 70, der in seitlichen Nuten 71 des Zylinders läuft und durch seitliche Kipphebel 72 (oder Schwinghebel) betätigt wird, deren Gleitsteine 73 in einer Kurvenbahn 74 der Kurbelwangen laufen. Zur vereinfachten Kurbelwellenmontage sind nockenbetätigte Kipp- oder Schwinghebel möglich, die jedoch Rückstellfedern erfordern. Eine ausschliessliche Schieberbetätigung via Mitnehmer 76 dürfte bezüglich Geräusch und Lebensdauer schwierig sein. Einfach und günstig ist indessen ein am Pendelkolben 50 angelenkter Schieber 77/70, der z.B. durch eine zwischen den Pleuelstangenhälften 52/52′ gehaltene Haarnadel-Doppelfeder 78 geführt ist. Statt auf der gewölbten Zylinderwand 80 kann der kurze Schieber 70 zwischen einem separaten, gewölbten Zylinderwandstück 81 und dem Zylindergehäuse 82 gleiten und dann eben sein und z.B. aus faserverstärkter Keramik bestehen. Bei einem adiabatischen Motor ist auch das Zylinderwandstück 81 bezw. das Zylindergehäuse 82 aus Keramik oder damit beschichtet, und keramische Nadellager 53 und 83 sollen einen schmieröllosen Motorbetrieb ermöglichen (Automobil Revue 31.7.1986).

Auch die viereckige Kolbenplatte 50 besteht aus (faserverstärkter) Keramik und weist vorzugsweise eines der folgenden Dichtelemente auf: Gemäss Fig. 7 auf den Stirnseiten ein halbkreisförmiges Stabelement 84, das z.B. in zwei etwa halbkreisförmigen Elementen 85 und 86 und letzteres in einer halbkreisförmigen Nut pendelnd gelagert ist. Der Gasdruck verdreht diese Elemente ineinander derart, dass sie meistens mit der unteren Kante gegenüber der Zylinderwand 80/81 dichten. Am Element 86 schliessen unter 90° zwei unter sich gleiche Dichtleisten 87 an, die durch Wellfedern gegen die ebenen Zylinderwände 88 vorgespannt werden. Bei der Variante nach Fig. 8 rotiert im Innern eines Rohrsektors 89 eine Nadel 90, was Reibung und Verschleiss vermindert und eine doppelte Gasdichtung ergibt. Fig. 9 zeigt dieselbe Dichtung auf der Seite des Auslassschiebers 77, der oben als Rohrsektor 89′ ausgebildet ist, in dem wiederum die Nadel (Rolle) 90 rotiert. Dies ist bei der Variante gemäss Fig. 10 nicht der Fall, doch hat hier der gerollte Rand 91 des Schiebers 77 höhere Dauerfestigkeit. Als Werkstoff kommt für die Teile 84 bis 87 und 89/90 Keramik und für den Schieber 77 nötigenfalls mit Keramik beschichteter Chromstahl in Frage.

Der separate Zylinderkopf 92 gemäss Fig. 5 und 6 kann z.B. ölgekühlt sein und aus Gusseisen oder Leichtmetall bestehen. Lange, teilweise ausserhalb des Zylinderblocks verlaufende Zuganker 93 verbinden ihn mit dem Kurbelgehäuse-Unterteil 60, was das Keramikgehäuse von Zugkräften entlastet. Der einseitige Drallkanal 95 mündet tangential in den z.B. kalottenförmigen Brennraum 67, in dessen Achse die pneumatische Einspritzdüse 97 (OEC, Automotive Engineering, August 1986) in einem Verstellkolben 98 eingeschraubt ist. Dieser ist im Deckel 99 durch Keilnuten gegen Verdrehen gesichert und wird via Gewinde durch ein Zahnrad 100 nach oben verschoben zur Verringerung des Kompressionsverhältnisses. Ein ähnliches Stirnrad 100' dient als Zwischenrad zum Stellmotor oder zum nächsten Zylinder. Ohne diese Verstelleinrichtung wird der Zylinderkopf äusserst einfach, wobei die Düse 97 näher zur Zündkerze 20 gedreht werden kann und dann direkt in Richtung Einlassmulde 65 einspritzt. - Als Variante ist ein runder oder ovaler Pendelkolben vorgesehen, wobei der Auslassschieber 70 innerhalb der Zylinderwand laufen oder dreidimensional bombiert und geführt sein muss.

Der Motor gemäss Fig. 11 und 12 basiert auf einem Baukasten, mit dem sich das Einzelzylindervolumen und die Zylinderzahl variieren lassen. Hierzu besteht das Motorgehäuse aus der rechten Zylinderwand 101 mit Lufteinlass 102 und der linken Zylinderwand 103, die beide innen gewölbt (mit z.B. bis zum Kurbelwellenflansch durchlaufendem Bogen) und mit den innen ebenen Seitenwänden 104 und 105 in Sandwichbauweise zusammengeflancht sind. Die Abdichtung erfolgt z.B. mittels Klebfolien, die Verbindung mittels langer Dehnschrauben oder entsprechender Nieten 106. Diese durchqueren vorzugsweise gegossene Löcher 107 bezw. Kühlmittelräume 108 und Zentrierhülsen 109, was eine auch bei Grauguss leichte und einfache Bauweise ergibt. Ein weiterer Vorteil sind kleine Gussteile grosser Stückzahl mit genauen Gaskanälen 110 und 111 und insbesondere eine einfache Bearbeitung der gewölbten Innenflächen 112 und der ebenen Innenflächen 113 mit freiem Werkzeugauslauf. Die Bearbeitung der Einlassflansche 114 und Auslassflansche 115 erfolgt nach dem Zusammenbau des Motorgehäuses, da sie sich über die benachbarten Gehäuseteile erstrecken. Die Seitenwände 104 und 105 sind entweder Teil der Motorstirnseiten oder eines Mittelgehäuses zwischen zwei Zylindern und stützen sich über gegossene Stege 116 auf die Gegenwände ab. Dieses Motorgehäuse wird unten durch das Kurbelgehäuse 117 und oben durch den Zylinderkopf 118 geschlossen, die beide je nach Zylinderzahl und Breite der Zylinderwände 101 und 103 unterschiedlich gestaltet sind.

Im Motorgehäuse läuft die Kurbelwelle 121 in Gleitlagern und wird durch die Lagerdeckel 122 gehalten, an denen auch das Kurbelgehäuse-Unterteil 117 angeschraubt ist. Ihre Kurbelscheiben 123 reichen seitlich bis an die ebenen Innenflächen 13 der Seitenwände 104 und 105 und weisen Dichtringe 124 auf, die in Verbindung mit den diametral geteilten Tellerfedern 125 eine gekapselte Druckölschmierung der Kurbelzapfen 127 und Hauptlager ergeben. Zur Schmierung des Pendelkolbens genügt das Lecköl.

Der rechteckige Pendelkolben 130 ist mit der kelchförmigen Pleuelstange 131 einteilig z.B. in Leichtmetall gegossen und durch dehnungshemmende Zuganker 132 von oben her mit dem z.B. aus Schwermetall bestehenden Gegengewicht 133 verschraubt, nötigenfalls unter Zwischenschaltung eines Kolbenbodens 134 aus Stahl oder Keramik. Auf ihrer Bewegungsbahn füllen die Pleuelstange 131 und ihr Gegengewicht 133 den Freiraum zwischen der Kurbelgehäuseinnenform 135 möglichst voll aus und wirken damit als integrierter Pleuellader einfachster Bauweise. Das Gegengewicht 133 ist unten vorzugsweise kreiszylindrisch bearbeitet und kann zur Verbesserung der Spaltdichtung feine, gegen die Ränder hin event. auslaufende Querrillen 136 aufweisen, und auf den ebenen Seitenflächen von Pleuelstange 131 und Gegengewicht 133 sind Dichtstreifen denkbar, zwischen welchen die Flächen zur Reibungsverminderung zurückgesetzt sein können. Bei von unten her verschraubtem Gegengewicht 137 erfolgt die Abdeckung der Schraubenköpfe 138 z.B. durch ein Segment 139 mit weniger störenden Zentralschrauben 140. Der Pleuelschaft weist unterhalb des Pendelkolbens 130 eine schräge Querwand 141 mit zentraler Stütz- und Kühlrippe 142 auf. Die Lagerung des Gusskernes des darunter liegenden Hohlraumes erfolgt durch die seitlichen Oeffnungen 143, die von den Flachschiebern 144 abgedeckt werden. Diese z.B. aus Blech gestanzten Schieber 144 sind mit ihren oberen und unteren, auf konzentrischen Kreisen 145 und 146 liegenden Rändern in entsprechende Aussparungen der Pleuelstangen-Seitenflächen eingelegt, wobei das Zentrum dieser Kreise vorzugsweise im Kolbenmittelpunkt 147 liegt. Die unteren Enden die Schieber 144 sind zu Gleitsteinen 148 umgebogen, die in Nuten 149 der ebenen Seitenwände 104 und 105 laufen und verhindern, dass die Schieber 144 die Pendelbewegungen der Pleuelstange 131 mitmachen. Dadurch lassen sich die Schlitze der Gaskanäle 110 und 111 näher an die Zylinderwände 112 heranrücken, d.h. breiter machen, was für raschen Gaswechsel wichtig ist. Eine elektromagnetische Einspritzdüse 150 mit Luftumhüllung aus Bohrungen 151 der Spülkanäle 110 wird vom Pendelkolben 130 optimal gegen Rauchgase abgedeckt.

Der neuartige Zylinderkopf 118 ist gekennzeichnet durch einen langgestreckten zylindrischen Brennraum 155, der in einer Normalebene zum Kurbelzapfen 127 liegt. Er ist auf der Einlassseite durch einen Kanal 156 und auf der Auslassseite durch Bohrungen 157 oder einen Spalt 158 mit dem Zylinder verbunden, wobei durch tangentiale oder radiale Anordnung von 156 und/oder 157/158 im Brennraum 155 ein Einlassdrall 159, ein Gegendrall oder kein Drall entsteht. In der Längsachse des Brennraums 155 und als dessen Abschluss ist rechts eine Glühkerze 161 (oder eine Zündkerze) und links ein hohler oder massiver Glühstab 162 eingeschraubt. Durch Variation von Länge und Durchmesser des Glühstabes 162 lässt sich das Kompressionsverhältnis justieren oder verändern. Die Zylinderfläche des Brennraumes 155 und gegebenenfalls des Glühstabes 162 ist hauchdünn mit Platin oder dergleichen beschichtet oder z.B. mit einem entsprechend beschichteten, auswechselbaren Blech- oder Netzteil überzogen zur Erzeugung der katalytischen Verbrennung.

Der Motor funktioniert wie folgt: Der Pleuellader mit unterem Totpunkt 165 (Pleuelachse tangiert Kurbelkreis) und oberem Totpunkt 166 saugt mit seiner rechten Seite vom Einlass 102 ungedrosselt Luft an. Gleichzeitig presst die linke Seite vorgängig angesaugte Luft via Kolbenkanäle 168 und Kolbenfenster 169 in die Spülmulden 110. Durch asymmetrische Form dieser Mulden 110 und 110' (Fig. 12) zueinander entsteht ein Einlassdrall 170, der sich durch auch im Grundriss asymmetrische Mulden verstärken und/oder bezüglich räumlicher Lage beeinflussen lässt. In diesen Luftdrall 170 wird durch die Düse 150 Brennstoff eingespritzt und das Gemisch durch den Pendelkolben 130 in Richtung Kanal 156 verschoben. Vorgängig findet durch die Bohrungen 157 oder den Spalt 158 eine Spülung des Brennraumes 155 mit brennstoffloser Luft (mit Rauchgasanteil) statt. Wie aus der Stellung 134* des Kolbenbodens bei 330° Kurbelwinkel ersichtlich, wird anschliessend das Brennstoff-Luftgemisch durch den Kanal 156 in den Brennraum 155 geschoben, wo es mit der Platinbeschichtung in Kontakt kommt, was bei einem Kompressions-verhältnis von gegen 16:1 eine sofortige katalytische Selbstentzündung auslöst. Eine Funkenzündanlage kann bei Benzinbetrieb entbehrlich sein und die Glühkerze 161 nur zum Kaltstart dienen. - Am Ende des Arbeitstaktes "kippt" der Pendelkolben die Rauchgase in die seitlichen Auslasskanäle 111, in die zur allfälligen Nachverbrennung vom Pleuellader her durch nicht gezeichnete kurze Bohrungen Druckluft eingeleitet werden kann, nötigenfalls unter Zwischenschaltung von Rückschlagventilen. Ein äusserer Katalysator scheint nicht erforderlich zu sein.

Von grosser Bedeutung ist beim Motor gemäss Fig. 11 und 12, dass der Pendelkolben 30 durch seine Pendelbewegung ein asymmetrisches Steuerdiagramm für Einlass (durch Pleuellader phasenversetzt und ohne Membranen usw. betätigt), Spülung und Auslass ergibt, während seine Rechteckform die Interfacebreite zwischen Frisch- und Rauchgas auf rund 60 % eines flächengleichen Rundkolbens reduziert. Weitere Vorteile sind der integrierte Pleuellader mit grossem Hubvolumen und entsprechend intensiver Zylinderspülung und Aufladung sowie der naheau schlagfreie, vibrations- und reibungsfreie Kolbenlauf, wie unter Fig. 1 erläutert. Beim vorliegenden Motor bildet der aus Pendelkolben, Pleuelstange und Gegengewicht bestehende Körper den Schwenkkolben des Pleuelladers und den Pendelkolben des Verbrennungsmotors, und weil er im Betrieb im Zylinder schwebt, könnte man ihn als "Doppelschwebekolben" bezeichnen. Durch entsprechende Gegengewichte der Kurbelwelle lässt sich dieser Körper bezüglich äusserer Massenkräfte hervorragend ausgleichen, obwohl seine Gesamtmasse kaum kleiner ist als diejenige eines entsprechenden Tauchkolbens mit Kolbenbolzen und Pleuelstange. Der Gegengewichtsaufwand wird beträchtlich, doch kann dies bei einem Mehrzylinder-Zweitakmotor ein sehr kleines Schwungrad 177 ermöglichen. Aus Platzgründen müssen die obenerwännten Gegengewichte der Kurbelwelle ausserhalb des Motorgehäuses auf dem Schwungrad 177 und auf der gegenüberliegenden Riemenscheibe angeordnet werden, was bei jeder Zylinderzahl möglich ist. Bei entsprechend breiteren Mittelgehäusen haben jedoch auch innere Gegengewichte zur Entlastung der Hauptlager Platz.

Fig. 13 zeigt vergrössert die linke Kolbenecke im oberen Totpunkt während des Arbeitshubes. Der Abwärtsgang beginnt bereits bei etwa 345° Kurbelwinkel, wobei die vorzugsweise aus Keramik bestehende Nadel oder Rolle 90 unter Gasdruck auf der gewölbten Zylinderwand 112 gemäss Drehpfeil abrollt. Dies erfolgt mit sehr kleiner Reibung und Verschleiss auf einem Gaspolster, das sich hinter und unter dem Rollkörper 90 bildet. Die seitlichen, zu 90 tangentialen Dichtleisten 87 laufen wegen ihrer geringen Höhe (geringe Gaskraft) auch reibungsarm, insbesondere wenn sie durch rotierende Nadeln ersetzt sind. Die Dichtelemente 87 und 90 sind in einer Stirnleiste 178 gelagert, die in einer stirnseitigen Kolbennut verschiebbar geführt ist und durch eine Blatt- oder Wellfeder 179 angestellt wird. In gleicher Weise ist auch die rechte Kolbenecke ausgebildet, doch ist dort zur Abstützung des Pleuellager-Reibmomentes keine oder eine härtere Feder 179 vorgesehen. Bei der Variante gemäss Fig. 14 ist der Rollkörper 90 durch eine Dichtleiste 180 mit bombierter Kuppe ersetzt, und die seitlichen Dichtleisten 181 berühren möglichst beide Zylinderwände 112, was eine verbesserte Dichtung ergibt und wegen der ständigen achsialen Verschiebungen ein Verkoken verhindert. Diese durchgehenden Dichtleisten 181 sind auch in Fig. 13 anwendbar. Im übrigen eignen sich hier auch Dichtelemente gemäss Fig. 7 und 8. Bei grossen Pendelkolben sind zur Kompensation von Wärdmedehnung und Verschleiss die Dichtleisten 87/181 und die Rollkörper 90 in der Länge zu unterteilen und gegeneinander überlappt zu stossen.

Als Variante zu Fig. 11 und 12 zeigt Fig. 15 einen Zylinderkopf nach Dr. D. Merritt (Automotive Engineer, Febr./März 1988), wobei der Motorkolben via Tangentialkanal 184 und der kleine Hilfskolben (mit Benzineinspritzung) z.B. via Radialkanal 185 mit dem kurzen, zylindrischen und mit Platin beschichteten Brennraum 186 verbunden ist. Dank der Pendelbewegung des Kolbens 134* (bei 330° Kurbelwinkel gezeigt) und dessen leistenförmiger Kolbennase 188 scheint die katalytische Selbstzündung auf viel einfachere Weise realisierbar zu sein. Allerdings müsste der Brennstoffstrahl der Niederdruck-Einspritzdüse 150 möglichst nicht in deren Achse, sondern quer dazu (Schirmdüse) austreten, um im Bereich des Kanals 185 zu bleiben. Die Brennräume gemäss Fig. 11/12 und 15 eignen sich auch für runde oder elliptische Schwebekolben etwa gemäss Fig. 5 und 6, doch ist dort der Pleuellader nicht sehr wirkungsvoll. Als weitere Variante zu Fig. 15 ist ein Viertakmotor zu nennen mit Einlassventil links, Auslassventil etwa in der Mitte und Brennraum 186 derart nach rechts verschoben, dass der Kanal 185 an der Zylinderwand 112 (analog zu Fig. 11) anschliesst. Der Pleuellader musste dann in einen Luftkasten fördern, der zum Hinlassventil führt. Als Alternative konnte der Pleuellader im unteren Bereich des Kompressionschubes dem Zylinder durch breite Spülmulden Zusatzluft zuführen und im unteren Bereich des Arbeitshubes Zusatzluft zur Durchspülung des Brennraumes 186 und zur allfälligen Nachverbrennung der Rauchgase. Solche Viertaktmotoren wären jedoch weder einfach noch kompakt und hätten natürlich den gravierenden Nachteil, dass auf einen Arbeitshub drei Leerhübe folgen.

Als weitere Variante zeigen Fig. 16 und 17 einen zu Fig. 11 und 12 passenden Zylinderkopf eines Benzinmotors mit Funkenzündung im teilweisen Quer- und Längsschnitt. Dabei sind die Zylinderwände 101 und 103 durch die bogenförmige Wand 190 zu einem Stück verbunden, das einen halbkugelähnlichen Brennraum 191 umfasst und auf der nach links verlängerten Linie 192 als Quetschspalt ausgebildet ist. Dieser Spalt erzeugt im Brennraum 191 einen Luftdrall, der sich dem Spülluftdrall 170 (Fig. 12) um 90° versetzt überlagert, was eine optimale Verwirbelung des Gemisches und rasche Entflammung durch die Zündkerze 20 bewirkt. Dieser Zylinderkopf 190 ist ebenfalls bohrungsgekühlt (enggeteilte Kühlmittelräume 108 mit durchlaufenden Zugankern 106), wobei als Kühlmittel das Motoröl dienen kann, das sich nach Austritt aus den Kurbelwellen-Rückflussbohrungen 126 (Fig. 11 und 12 unten) bei vertikaler Motorlage im Kanal 195, bei nach rechts stark geneigter Motorlage im Kanal 197 sammelt und durch Rohre 196 oder wesentlich dickere abgesaugt wird. Als Variante ist ein separater Zylinderkopf mit der Innenform gemäss Fig. 16 und 17 gegen den Kopf 118 von Fig. 11/12 austauschbar. Dabei erfolgt die Regelung der Motorleistung durch eine im Lufteinlass 102 angeordnete Drosselklappe, was jedoch zu Drosselverlusten führt, die bei Vergaserbetrieb unvermeidlich sind. Bei Benzineinspritzung durch die Düse 150 (oder 97 von Fig. 5/6) kann die Drosselklappe in nicht gezeichneten stirnseitigen Kanälen angeordnet werden, welche die Gaskanäle 110 (Spülmulden) als By-pass mit dem Lufteinlass 102 verbinden, wodurch bei Teillast oder Zylinderabschaltung die vom Pleuellader geförderte überschüssige Luft verlustarm im Kreis herum zirkuliert.

Aus dem Motor gemäss Fig. 11 und 12 lässt sich ein Kompressor ableiten, indem die Kolbenbreite etwa verdoppelt, die Gasschieber 144 und der Auslasstrakt 111/115 entfernt, die Einlassmulde 110 bis zu 110″ erweitert und der Zylinderkopf 108 durch einen mit Auslass-Plattenventilen ersetzt wird. Dank der Pleuelpumpe ergibt sich dann in einfachster Weise ein zweistufiger Kompressor ohne Einlassmembranen (die bei Kälte leicht vereisen), der sich z.B. für eine Wärmepumpe eignet, die z.B. durch einen wartungsfreundlichen Gasmotor analog zu Fig. 11/13 und 16/17 angetrieben wird.

Die Wartungsfreundlichkeit ist bei den dargelegten Pendelkolbenmaschinen schon durch ihre äusserste Einfachheit gegeben. Die wenigen Verschliessteile sind leicht auswechselbar, z.B. bei Fig. 1 der ganze Schwebekolben 1-4 nach unten bei montierter Kurbelwelle und bei Fig. 5/6 der separate Pendelkolben 50 nach oben. Dank der kurzen Schrauben 129 kann bei Fig. 11/12 der Kolbenboden 134 ebenfalls nach oben demontiert werden, was ein Auswechseln der Mehrzahl der Dichtelemente ermöglicht. Dies gelingt bei der Variante mit den Zugankern 132 nur mit Hilfe der Montageschraube 198 (Fig. 11 oben rechts) mit langem, randriertem Handgriff 199 und Einschnürung 200, in die eine Gabel (Schlitz) des Winkels 201 eingreift und eine Fixierung des Schwebekolbens am Zylinderkopfflansch und anschliessenden Ausbau ermöglicht, was indessen, sofern zugänglich, auch nach unten erfolgen kann.

Nachzutragen ist noch, dass der Zylinderkopf 118 von Fig. 11/12 sich auch für Dieselbetrieb eignet, sofern der Glühstab 162 durch eine genügend lange Glühkerze ersetzt wird und anstelle der Kerze 161 eine Hochdruck-Einspritzdüse tritt. Auch hier erübrigt sich die beim Zylinderkopf von Fig. 16/17 nötige Drosselung der Ansaugluft.

Zur teilweisen Ausnützung der Abgasenergie ist bei Motoren gemäss Fig. 11/12 ein Lufteinlass 102 unter Turboladerdruck möglich, wobei der Pleuellader zum Teil als Druckluftmotor arbeitet und durch die verstärkte Zylinderspülung und Zylinderfüllung effektive Mitteldrücke von weit über 10 bar auch bei huhen Drehzahlen erreichbar sind. Als variante kann eine Abgasturbine über eine geräuschlose Schneckenreduktion und einen Freilauf die Kurbelwelle zusätzlich antreiben, wobei eine zwischen Turbine und Schnecke angeordnete Viscokupplung harte Synchronisierungsstösse abfängt.

## Patentansprüche

1. Pendelkolbenmaschine mit einem an einer Pleuelstange (1) fest angebrachten, hemdlosen Kolben (2), der auf seinem Rand in einem Zylinder läuft, dadurch gekennzeichnet, dass in Verlängerung der Pleuelstange (1) über die Pleuelstange (1) hinaus ein Gegengewicht (4) angeordnet und derart bemessen ist, dass das Zentrum (6) des Pleuellagers (3) mindestens angenähert im Stossmittelpunkt bezüglich des Kolbenmittelpunktes (2*, 147) des darauf gelagerten Körpers, bestehend aus Kolben (2), Pleuelstange (1), Pleuellager (3) und Gegengewicht (4) liegt.

2. Pendelkolbenmaschine nach Anspruch 1, als Zweitaktmotor ausgebildet, dadurch gekennzeichnet, dass das Gegengewicht (55, 133) als Schaufellader einer Kurbelkammerpumpe ausgebildet ist und in einem enganliegenden Gehäuse (60, 117) läuft.

3. Pendelkolbenmaschine nach Anspruch 1, ausgebildet als Zweitakt-Schiebermotor mit viereckigem Pendelkolben, dadurch gekennzeichnet, dass ein Auslassschieber (77) auf oder in einer stirnseitigen Zylinderwand läuft, am Kolbenrand angelenkt ist und durch Führungen oder Federkraft geführt wird.

4. Pendelkolbenmaschine nach Anspruch 1, ausgebildet als Druckgasmotor, dadurch gekennzeichnet, dass in der Schlagebene der Pleuelstange der im oberen Totpunkt nachlaufende Kolbenrand ein darüber angeordnetes Ventil (43) betätigt und somit den Gaszufluss asymmetrisch zum oberen Totpunkt öffnet und schliesst.

5. Pendelkolbenmaschine nach Anspruch 1, 2 oder 3, dadurch gekennzeichnet, dass die Pleuelstange (131) samt Gegengewicht (133) die gleiche Breite hat wie der viereckige Pendelkolben (130) und vom Zylinderkurbelgehäuse (117) end umfasst wird und damit einen volumetrischen Pleuellader bildet, wobei der vorzugsweise halbkreisförmige Rand (136) des Gegengewichts (133) zur Bildung einer Labyrinthdichtung wenigstens teilweisequer gerillt sein kann.

6. Rendelkolbenmaschine nach Anspruch 1 oder 5, dadurch gekennzeichnet, dass die Pleuelstange ein dünnwandiger Hohlkörper (131) aus leichtem Werkstoff mit daran fester oder befestigter Kolbenplatte (130) ist.

7. Pendelkolbenmaschine nach Anspruch 6, dadurch gekennzeichnet, dass ab Mitte Pleuellager das Gegengewicht als Lagerdeckel (133, 137, 139) anschliesst.

8. Pendelkolbenmaschine nach Anspruch 5, 6 oder 7, ausgebildet als Zweitakt-Schiebermotor, dadurch gekennzeichnet, dass die Pleuelstange beidseitig in Aussparungen je einen Flachschieber (144) trägt, der auf seinen kreisbogenförmigen Rändern (145, 146) vorzugsweise um den Kolbenmittelpunkt (147) schwenkbar und dichtend gelagert ist und an seinen unteren Ecken Gleitsteine (148) aufweisen kann, die in Nuten (149) der ebenen Seitenwände laufen.

9. Pendelkolbenmaschine nach Anspruch 5, ausgebildet als Zweitaktmotor mit Benzineinspritzung, dadurch gekennzeichnet, dass zwischen den Spülkanälen/Spülmulden (110/110') und dem Lufteinlass (102) des Pleuelladers stirnseitige, klappengesteuerte Kanäle als Bypass angeordnet sind zur verlustarmen Rezirkulation der bei Teillast oder Zylinderabschaltung überschüssigen Laderluft.

10. Pendelkolbenmaschine nach einem der Ansprüche 2, 3 und 5 bis 9, dadurch gekennzeichnet, dass die seitlichen Spülkanäle/Spülmulden (110, 110') asymmetrisch zueinander derart geformt sind, dass ein Spüldrall (170) entsteht.

11. Pendelkolbenmaschine nach einem der Ansprüche 2, 3 und 5 bis 10, dadurch gekennzeichnet, dass der Zylinderkopf einen langgestreckten, im wesentlichen zylindrischen Brennraum (155) aufweist, der wenigstens angenähert in der Pleuelschlagebene liegt und mit dem Zylinderraum durch Schlitze (158) und/oder Bohrungen (156) verbunden ist und vorzugweise am einen Ende eine Glüh- oder Zündkerze (161) aufweist und mit Edelmetall beschichtet ist.

12. Pendelkolbenmaschine nach Anspruch 11, dadurch gekennzeichnet, dass ausser der Kerze (161) auch ein Glühstab (162) im zylindrischen Brennraum (155) angeordnet ist, welcher Glühstab vorzugsweise mit einem Edelmetall für eine katalytische Zündung beschichtet ist.

13. Pendelkolbenmaschine nach Anspruch 12, dadurch gekennzeichnet, dass der Brennraum durch die Kippbewegung des Kolbens im wesentlichen in einer Richtung vorzugsweise geschichtet durchströmt wird.

14. Pendelkolbenmaschine nach Anspruch 12 oder 13, dadurch gekennzeichnet, dass der Glühstab auswechselbar ist, damit das Kompressionsverhältnis und damit der Zündzeitpunkt justiert werden kann.

15. Pendelkolbenmaschine nach Anspruch 1, dadurch gekennzeichnet, dass sie als einstufiger Verdichter ausgebildet ist (Fig 3).

16. Pendelkolbenmaschine nach Anspruch 5, dadurch gekennzeichnet, dass sie als zweistufiger Verdichter ausgebildet ist, indem der Pleuellader die erste Stufe bildet und der Raum über dem Kolben als vorzugsweise über Ueberströmkanäle (Einlassmulden 110″) beschickte zweite Stufe wirkt, während der Auslass im Zylinderkopf mit einem Rückschlagventil, insbesondere Plattenventil, versehen ist.

17. Pendelkolbenmaschine nach Anspruch 1, mit viereckigem Kolben, dadurch gekennzeichnet, dass eine Kolbendichtung aus mindestens einem im Querschnitt etwa halbkreisförmigen Element (84, 85, 86) besteht, welches zum Kolben und zu allfälligen weiteren Elementen schwenkbar ist, damit eine Stirnfläche unter dem Einfluss des Gasdruckes auf die gegenüberliegende Stirnfläche dichtend an der Zylinderwand anliegt.

18. Pendelkolbenmaschine nach Anspruch 17, dadurch gekennzeichnet, dass das innerste Dichtelement eine rotierende Nadel oder Rolle (90) ist.

19. Pendelkolbenmaschine nach Anspruch 1, 17 oder 18, dadurch gekennzeichnet, dass die Stirndichtungen durch elastische Mittel (179, Fig. 13, 14) auf dem Kolben abgestützt sind.

20. Pendelkolbenmaschine nach Anspruch 1, dadurch gekennzeichnet, dass die Pleuelstange der Länge nach in zwei Teile (52,52') geteilt ist.

21. Pendelkolbenmaschine nach Anspruch 1, dadurch gekennzeichnet, dass die Kolbenplatte (50) verschraubt ist, so dass sie samt den Dichtungen (87) nach oben ausgebaut werden kann.

22. Pendelkolbenmaschine nach Anspruch 2, dadurch gekennzeichnet, dass sie mit einem Abgasturbolader ausgestattet ist, so dass der Pleuellader zum Teil als Druckluftmotor arbeitet.

23. Pendelkolbenmaschine nach Anspruch 1, ausgebildet als Verbrennungsmotor, dadurch gekennzeichnet, dass sie mit einer Abgasturbine ausgerüstet ist, welche über ein Schneckengetriebe mit Freilauf und vorzugsweise auch einer Viscokupplung die Kurbelwelle zusätzlich antreibt.

24. Pendelkolbenmaschine nach Anspruch 1, mit rundem oder viereckigem Kolben (2, 26), im Querschnitt schlanker Pleuelstange (1, 25) sowie gewölbtem Zylinder, ausgebildet als Viertaktmotor (Fig. 1) oder als Verdichter (Fig. 3).


## Revendications

1. Machine à piston pendulaire comportant un piston (2) sans jupe solidaire d'une bielle (1) et se déplaçant, sur son bord, dans un cylindre, caractérisée en ce qu'il est prévu, dans le prolongement de la bielle (1), un contrepoids (4) qui dépasse de celle-ci et est dimensionné de telle sorte que le centre (6) du palier de bielle (3) se trouve au moins approximativement au centre de percussion du corps monté sur lui et formé du piston (2), de la bielle (1), du palier de bielle (3) et du contrepoids (4), par rapport au centre (2*, 147) du piston.

2. Machine à piston pendulaire selon la revendication, conçue comme un moteur deux temps, caractérisée en ce que le contrepoids (55, 133) est conçu comme pale d'une pompe à carter de vilebrequin et se déplace dans un carter ajusté (60, 117).

3. Machine à piston pendulaire selon la revendication 1, conçue comme un moteur deux temps à tiroir comportant un piston pendulaire quadrangulaire, caractérisée en ce qu'un tiroir d'échappement (77) se déplace sur ou dans une paroi de cylindre située côté frontal, est articulé au bord du piston et est guidé par des glissières ou par une force de ressort.

4. Machine à piston pendulaire selon la revendication 1, conçue comme un moteur à gaz comprimé, caractérisée en ce que, dans le plan de mouvement de la bielle, le bord poursuivant du piston au point mort haut actionne une soupape (43) disposée au-dessus de lui et ouvre et ferme ainsi l'arrivée de gaz de façon asymétrique par rapport au point mort haut.

5. Machine à piston pendulaire selon la revendication 1, 2 ou 3, caractérisée en ce que la bielle, (131) ensemble avec le contrepoids, a la même largeur que le piston pendulaire quadrangulaire (130) et est entourée de façon étroite par le carter (117) de la bielle et piston et définit ainsi un compresseur volumétrique à bielle, le bord (136), de préférence semi-circulaire, du contrepoids (133) pouvant être au moins partiellement cannelé transversalement pour former un élément d'étanchéité à labyrinthe.

6. Machine à piston pendulaire selon la revendication 1 ou 5, caractérisée en ce que la bielle est un corps creux (131) à paroi mince, réalisé en un matériau léger et comportant, solidaire ou fixé sur lui, une plaque de piston (130).

7. Machine à piston pendulaire selon la revendication 6, caractérisée en ce que, à partir du milieu du palier de bielle, le contrepoids se raccorde sous la forme d'un chapeau de bielle (133, 137, 139).

8. Machine à piston pendulaire selon la revendication 5, 6 ou 7, conçue comme un moteur deux temps à tiroir, caractérisée en ce que la bielle porte de chaque côté, dans des évidements, un tiroir plat (144) qui est monté, sur ses bords (145, 146) en arc de cercle, de manière étanche et de préférence pivotant autour du centre (147) du piston, et peut présenter, au niveau de ses coins inférieurs, des coulisseaux (148) qui se déplacent dans des rainures (149) des parois latérales planes.

9. Machine à piston pendulaire selon la revendication 5, conçue comme un moteur deux temps à injection d'essence, caractérisée en ce que les canaux/cavités latéraux de transfert (110/110') sont reliés, moyennant des clapets commandés et des canaux frontales en forme de by-pass, à l'entrée d'air (102) du compresseur à bielle afin de récirculer l'air superflue du compresseur avec des pertes réduites, lorsque le moteur marche à charge partielle ou à coupure de cylindre.

10. Machine à piston pendulaire selon l'une des revendications 2, 3 et 5 à 9, caractérisée en ce que les canaux/cavités latéraux de transfert (110, 110') sont formés de façon asymétrique les uns par rapport aux autres de manière à engendrer un balayage tourbillonnaire (170).

11. Machine à piston pendulaire selon l'une des revendications 2, 3 et 5 à 10, caractérisée en ce que la culasse possède une chambre de combustion (155) allongée et sensiblement cylindrique qui se trouve au moins approximativement dans le plan de mouvement de la bielle et est reliée à l'espace du cylindre par des fentes (158) et/ou des perçages (156), cette chambre de combustion possède de préférence à une extrémité une bougie de préallumage ou d'allumage (161) et est recouverte d'un métal précieux.

12. Machine à piston pendulaire selon la revendication 11, caractérisée en ce que, en plus de la bougie (161), une tige de préallumage (162) est disposée dans la chambre de combustion cylindrique (155), ladite tige de préallumage étant recouverte, de préférence, d'un métal précieux en vue d'un allumage catalytique.

13. Machine à piston pendulaire selon la revendication 12, caractérisée en ce que la chambre de combustion est traversée, sous l'effet du mouvement pendulaire du piston, par un écoulement stratifié, de préférence dirigé sensiblement dans une direction.

14. Machine à piston pendulaire selon la revendication 12 ou 13, caractérisé en ce que la tige de préallumage est interchangeable, afin que le taux de compression et, ainsi, l'instant d'allumage puissent être ajustés.

15. Machine à piston pendulaire selon la revendication 1, caractérisée en ce qu'elle est conçue comme un compresseur à un étage (fig. 3).

16. Machine à piston pendulaire selon la revendication 5, caractérisée en ce qu'elle est conçue comme un compresseur à deux étages, le compresseur à bielle constituant le premier étage et l'espace prévu au-dessus du piston agissant comme second étage alimenté de préférence par l'intermédiaire de canaux de transfert (cavités 110″), tandis que l'échappement prévu dans la culasse est pourvu d'un clapet anti-retour, notamment d'un clapet à plaque.

17. Machine à piston pendulaire selon la revendication 1, comportant un piston quadrangulaire, caractérisée en ce qu'une garniture d'étanchéité de piston se compose d'au moins un élément (84, 85, 86, fig. 7) à section transversale sensiblement semi-circulaire, qui est apte à pivoter par rapport au piston et à d'éventuels autres éléments, pour qu'une surface frontale s'applique sous l'influence de la pression gazeuse agissant sur la surface frontale opposée, de façon étanche à la paroi du cylindre.

18. Machine à piston pendulaire selon la revendication 17, caractérisée en ce que l'élément d'étanchéité le plus à l'intérieur est une aiguille ou un galet rotatif (90).

19. Machine à piston pendulaire selon les revendications 1, 17 ou 18, caractérisée en ce que les éléments d'étanchéité frontaux prennent appui sur le piston par des moyens élastiques (179, fig. 13, 14).

20. Machine à piston pendulaire selon la revendication 1, caractérisée en ce que la bielle est divisée en deux parties (52, 52′) dans le sens de la longueur.

21. Machine à piston pendulaire selon la revendication 1, caractérisée en ce que la plaque de piston (50) est vissée, de sorte qu'elle peut être enlevée par le haut ensemble avec les éléments d'étanchéité (87, fig. 12).

22. Machine à piston pendulaire selon la revendication 2, caractérisée en ce qu'elle est équipée d'un turbocompresseur à gaz d'échappement, de sorte que le compresseur à bielle fonctionne en partie comme un moteur à air comprimé.

23. Machine à piston pendulaire selon la revendication 1, conçue comme un moteur à combustion interne, caractérisée en ce qu'elle est équipée d'une turbine à gaz d'échappement qui entraîne de manière supplémentaire le vilebrequin par l'intermédiaire d'un engrenage à vis sans fin, d'une roue libre et, de préférence, d'un viscocoupleur.

24. Machine à piston pendulaire selon la revendication 1, comportant un piston rond ou quadrangulaire (2, 26), une bielle (1, 25) à section transversale mince et un cylindre rétrécie, conçue comme un moteur quatre temps (fig. 1) ou comme un compresseur (fig. 3).

## Claims

1. A rocking-piston machine having a skirtless piston (2) integral with or attached to a connecting rod (1), which piston runs on its edge in a cylinder, characterised in that a counterweight (4) is located beyond the connecting rod (1) in an extension of the connecting rod (1) and is dimensioned such that the center (6) of the connecting-rod bearing (3) is located at least approximately in the center of impact with regard to the central point of the piston (2*, 147) of the body mounted thereon, consisting of piston (2), connecting rod (1), connecting-rod bearing (3) and counterweight (4).

2. A rocking-piston machine according to claim 1, designed as two-stroke engine, characterised in that the counterweight (55, 133) is designed as a blade of a crankcase charge pump and runs in a closely-surrounding housing (60, 117).

3. A rocking-piston machine according to claim 1, designed as a two-stroke slide-valve engine with a quadrangular rocking piston, characterised in that an exhaust slide (77) runs on or in a frontal cylinder wall, is pivotably attached to the piston edge and is guided by guides or spring force.

4. A rocking-piston machine according to claim 1, designed as a compressed gas engine, characterised in that in the swinging plane of the connecting rod, the piston edge which is trailing in the top dead center actuates a valves (43) located thereover and thus opens and closes the gas supply asymmetrically to the top dead center.

5. A rocking-piston machine according to claim 1, 2 or 3, characterised in that the connecting rod (131) including the counterweight (133) has the same width as the quadrangular rocking piston and is closely surrounded by the cylinder and crankcase (117) and thus forms a volumetric connecting-rod charger, in which case the preferably semicircular edge (136) of the counterweight (133) may at least partially be transversely grooved to form a labyrinth sealing.

6. A rocking-piston machine according to claim 1 or 5, characterised in that the connecting rod is a thin-walled hollow body (131) of lightweight material with a piston plate (130) integral therewith or attached thereto.

7. A rocking-piston machine according to claim 6, characterised in that from the middle of the connecting-rod bearing, the counterweight adjoins as a bearing cap (133, 137, 139).

8. A rocking-piston machine according to claim 5, 6 or 7, designed as a two-stroke slide-valve engine, characterised in that the connecting-rod bears one slide plate (144) each on either side in recesses, which slide plate is supported sealingly and preferably pivotable about the central point (147) of the piston on its arc-like edges (145, 146) and may have at its lower corners sliding members (148) which run in grooves (149) of the flat side walls.

9. A rocking-piston machine according to claim 5, designed as a two-stroke engine with gasoline injection, characterised in that the intake ducts (110/110') are linked via flap-controlled, frontal channels as a by-pass to the air intake (102) of the connecting rod-charger, whereby at part load or cylinder cut-off, the charger's excess air is re-circulated with reduced losses.

10. A rocking-piston machine according to one of claims 2, 3 and 5 to 9, characterised in that the lateral scavenging ducts/scavenging troughs (110, 110') are formed asymmetrically to one another in such a manner that a swirl (170) is produced.

11. A rocking-piston machine according to one of claims 2, 3 and 5 to 10, characterised in that the cylinder head has an elongated, substantially cylindrical combustion cavity (155) which lies at least approximately in the swinging plane of the connecting rod and communicates with the cylinder chamber by slots (158) and/or bores (156) and preferably has a glow plug or spark plug (161) at one end, and is coated with precious metal.

12. A rocking-piston machine according to claim 11, characterised in that in addition to the spark plug (161), a glow rod (162) is also located in the cylindrical combustion cavity (155), which glow rod is preferably coated with a precious metal for initiating catalytic combustion.

13. A rocking-piston machine according to claim 12, characterise in that the gas flow through the combustion cavity is substantially uniflow, preferably stratified, due to the oscillating movement of the piton.

14. A rocking-piston machine according to claim 12 or 13, characterise in that the glow rod is exchangeble, so that the compression ratio hence the ignition point can be adjusted.

15. A rocking-piston machine according to claim 1, characterised in that it is designed as one-stage compressor (Fig. 3).

16. A rocking-piston machine according to claim 5, characterised in that it is designed as a two-stage compressor in which the connecting-rod charger forms the first stage and the space above the piston acts as a second stage which is preferably fed via transfer channels (inlet troughs 110''), whereas the outlet in the cyliner head is provided with a non-return valve, in particular a plate valve.

17. A rocking-piston machine according to claim 1, with a quadrangular piston, characterised in that a piston seal consists of at least one element (84, 85, 86) which is approximately semicircular in cross-section, which element is pivotable relative to the piston an any other elements, so that one end face abuts sealingly on the cylinder wall under the influence of the pressure on the opposing end face.

18. A rocking-piston machine according to claim 17, characterised in that the innermost sealing element is rotating needle or roller (90).

19. A rocking-piston machine according to claim 1, 17 or 18, characterised in that the end seals are supported on the piston by elastic means 179, Figs. 13, 14).

20. A rocking-piston machine according to claim 1, characterise in that the connecting rod is divided into two part (52, 52') by length.

21. A rocking-piston machine according to claim 1, characterised in that the piston plate (50) is screwed so that it can be removed at the top together with the seals (87).

22. A rocking-piston machine according to claim 2, characterised in that it is equipped with an exhaust-gas turbocharger, so that the connecting-rod charger partly operates as a compressed-air engine.

23. A rocking-piston machine according to claim 1, designed as an internal combustion engine, characterise in that it is equipped with an exhaust-gas turbine which additionally drives the cranshaft via a freewheeling worm

gear and preferably also a viscocoupling.

24. A rocking-piston machine according to claim 1, with a round or quadrangular piston (2, 26), a connecting rod (1, 25) which is narrow in cross-section and also a waisted cylinder, designed as a four-stroke engine (Fig. 1) or as a compressor (Fig. 3).

F 2

F 3

F 7

F 8

F 9

F 10

F 4

F 1

F 5

F 6